# NEW EUROPEAN PATENT SPECIFICATION

(11) **EP 2 000 784 B2**
(45) Date of publication and mention of the opposition decision: **15.12.2021**
(45) Mention of the grant of the patent: 13.03.2019
(21) Application number: 07011106.7
(22) Date of filing: 06.06.2007
(51) Int. Cl.: G01F 1/66, G01F 15/02

(54) **Ultrasonic flow meter with temperature compensation**
Ultraschalldurchflussmesser mit Temperaturkompensation
Débitmètre à ultrasons à compensation de température

(43) Date of publication of application: 10.12.2008
(73) Proprietor: KAMSTRUP A/S, 8660 Skanderborg (DK)
(72) Inventor: Drachmann, Jens, 8260 Viby J (DK)
(74) Representative: Patentanwälte Vollmann Hemmer Lindfeld Partnerschaft mbB

(56) References cited:
- EP-A- 0 846 936
- EP-A2- 1 985 974
- EP-A2- 1 985 974
- DD-A- 300 585
- DE-A1- 10 057 188
- JP-A- H10 239 123
- US-A- 4 245 501
- US-A- 5 502 652
- US-A- 5 502 652
- US-A- 5 546 813
- US-A1- 2006 155 515
- PETKUS V. et al.: "Temperature dependence of a piezoceramic transducer electric impedance", Ultragarsas, vol. 56, no. 3, 25 November 2005 (2005-11-25), pages 22-25, XP055669531, ISSN: 1392-2114

## Description

### Field of the Invention

The invention relates to the field of flow meters for measurement of liquid flow. More specifically, the invention relates to the field of high precision ultrasound flow meters, such as flow meters used in heat meters. Especially, the invention provides a flow meter arranged to measure a liquid flow with a correction taking into account the liquid temperature.

### Background of the invention

High precision flow meters based on measurement of liquid flow rate by means of ultrasound waves are well-known, e.g. for use in heat meters. The liquid flow rate Is determined by measuring a transit time difference for ultrasonic waves to travel a well-defined distance in a measurement pipe. However, it is well-known that the relation between flow rate and transit time difference is not perfectly linear over a wide range of flow rates due to the flow mode in the measurement pipe changes from laminar to turbulent depending on the flow rate. Thus, to obtain a high precision flow rate, it Is necessary to correct the measured ultrasonic transit time difference In dependence on the flow rate. This is typically done by applying tabulated corrections factors to the measured data.

It is also known that other factors apart from the flow rate influences the measurement precision of an ultrasonic flow meter. Thus, in high precision flow meters it is taken into account that the flow rate correction factor further depends on the temperature of the liquid. Thus, the correction factors can be a 2-dimenslonal set of values. Taking into account the temperature of the liquid in the correction factor typically involves measuring the liquid temperature by a temperature sensor in the flow meter.
However, such flow meter with a temperature sensor dedicated to the mentioned correction is complex and expensive. This is due to the fact that the temperature sensor constitutes an additional component that needs to be integrated in connection with the measurement pipe and also necessitates a separate electrical connection to a calculation unit. In addition, the temperature sensor itself constitutes a source of malfunction and thus generally degrades reliability of the flow meter.

US patent publication number 5,502,652 discloses an ultrasonic flow measurement and a temperature measurement of a liquid used in a heat delivery system, using two piezoelectric transceivers and measuring both average velocity and differential velocity to give temperature and flow rate.

### Summary of the invention

According to the above description, it is an object of the present invention to provide a heat meter for determining a heat quantity with a reliable high precision ultrasonic flow meter without the need for any separate component for determining a flow velocity with high precision.

The invention provides a heat meter arranged to determine a heat quantity comprising a flow meter for measuring a liquid flow rate, the flow meter comprising
- an ultrasound measurement arrangement including two piezoelectric ultrasound transducers arranged to generate and receive an ultrasound signal in a measurement pipe where the liquid flows,
- a processor electrically connected to the two piezoelectric ultrasound transducers to perform an ultrasound measurement sequence and to calculate a measure of liquid flow rate based thereon, and wherein the processor is further arranged to calculate the liquid flow rate by applying a correction to the measure of liquid flow rate, and
- an analog transducer interface, arranged to interconnect the processor and the ultrasound measurement arrangement,
wherein the processor determines the correction based on an electric signal received from one of the two piezoelectric ultrasound transducers in response to an electric measurement signal applied to the one piezoelectric ultrasound transducer by the processor through the analog transducer interface,
characterised in that the processor, based on digital signal processing of the received electrical signal, is arranged to determine a measure related to temperature of the liquid based on a measure related to electric capacitance of the one piezoelectric ultrasound transducer.

The flow meter is capable of providing high precision flow rate data without the need for extra elements compared to traditional flow meters. The reason is that the known piezo-electric ultrasound transducers such as used in existing ultrasound flow meters are used to derive additional data that enables calculation of a correction to the immediately measured flow rate, and thus a more accurate flow rate result can be achieved. It can be utilized that piezo-electric ultrasound transducer is in contact with the liquid in the measurement pipe and thus the piezo-electric material in the transducer has the same temperature as the liquid.

Since plezo-electric material changes electric characteristics with temperature, especially its electric capacitance, the electric measurement signal applied to the transducer can be used to derive a measure of the temperature, based on the electric response from the transducer. This measure of temperature can then be used in the determination of the correction factor to be used. Thus, a high precision flow rate can be determined taking into account the liquid temperature without the need for a separate temperature sensor. Existing ultrasonic flow meters can be used with only a modification of the processor which must be arranged to receive the electric response from the at least one transducer and determine the correction factor based thereon. Thus, modifications of existing flow meters can be reduced to modifications in the processor, i.e. without any extra sensors or extra wiring required, thereby eliminating potential factors reducing reliability of the flow meter.

The processor may first determine a measure of the capacitance of the transducer, and thereby determine a measure of the liquid temperature, which is finally used to select the appropriate correction factor among a set of tabulated values.

Especially, the ultrasound measurement sequence is utilized as the electrical measurement signal. Thus, the electric signal applied to the at least one transducer to determine the measure of liquid flow rate may be used also to determine the correction, since this only requires that the electric response from the at least one transducer is received by the processor and processed, e.g. such as described above, in order to determine a measure of the liquid temperature, thereby enabling selection or calculation of a correction value depending on flow rate as well as temperature. However, it may be preferred to arrange the processor to perform a separate dedicated electric signal, or sequence of signals, to the at least one transducer with the purpose of determining a measure of liquid temperature for use in determining the correction.

In some embodiments, the correction may be based on electric signals received from both of the at least two piezoelectric ultrasound transducers. In this way it is possible to calculate the correction data based on an average value of measured response from the two piezoelectric transducers, and thus a more reliable correction value can be obtained compared to measuring on one transducer only. Especially, in one embodiment the ultrasound measurement sequence used on both transducers are used as measurement signals on the respective transducers.

The flow meter may be arranged to determine a measure of electric capacitance of the at least one piezoelectric ultrasound transducer, or at least the flow meter is arranged to determine a value or measure related to the electric capacitance of the at least one piezoelectric ultrasound transducer in order to provide a value or measure indirectly reflecting the liquid temperature. This value or measure can then be used in determining the correction to be applied to the immediately measured ultrasonic transit time difference or flow rate. Preferably, the correction to be applied is thus depending on the liquid flow rate as well as liquid temperature, either by calculating the correction value using a predetermined formula, or by selecting the correction value from tabulated data.

Especially flow meter embodiments arranged to determine liquid temperature data, or at least data related to the liquid temperature, is capable of providing high precision flow results over a wide range of liquid flow speeds and liquid temperatures. By a mode of flow is understood the way the liquid flows in the measurement pipe, I.e. varying from laminar at very small flow speeds, to turbulent at very high flow speeds. Preferably, the mode of flow is expressed directly as a function of measured flow rate such that a mode of flow is corrected for by simply applying a correction factor to the measured flow rate. The temperature correction adds a further dimension to the correction, and thus tabulated values and/or formulas of correction factors for different flow rates and temperatures are required.

The flow meter may be arranged to transmit data representing the measure of temperature of the liquid, or at least data related to the temperature of the liquid. Such data can be used by a connected heat meter calculator in detection of installation errors. E.g. the temperature data allows the heat meter calculator to determine if the flow meter is installed on the "cold" or "hot" heat supply pipe, and then compare this result with the configuration which the calculator is designed for. Further, the flow meter may be arranged to transmit data representing the liquid flow rate and data representing the measure of temperature of the liquid on one communication line, thus saving a possible separate line for the extra temperature data. The flow meter may alternatively be arranged to transmit both of the liquid flow rate data and the measure of temperature data wirelessly.

To provide a compact flow meter, the ultrasound measurement arrangement and the processor may be integrated into one unit.

The electrical measurement signal preferably includes one or more pulses, e.g. a single pulse or a train of pulses. However, a wide range of other measurement signal may be used, e.g. pseudo random noise sequences etc. such as methods known by the skilled person.

The flow meter may be arranged to apply the electrical measurement signal before, during or after an ultrasound measurement sequence. E.g. the electrical measurement signal may be applied to one or both transducers in the ultrasound measurement sequence between a first ultrasound measurement from the first to the second transducer and a second ultrasound measurement the opposite way. As described above, the electrical measurement signal may alternatively be the same electrical signal used to apply to the transducer(s) to determine the ultrasonic transit time difference and thereby the uncorrected flow rate. However, it may also be preferred to both utilize this electrical signal in combination with a separate dedicated measurement signal, and then determine the correction based on a combination of electrical responses from the transducer(s) to the respective electrical signals. In this way, a more precise and reliable determination of the correction may be obtained without requiring too much extra time and power consumption to introduce a correction taking into account the liquid temperature.

In some embodiment, the ultrasound measurement arrangement and the processor are integrated into one unit, such as housed within a single casing.

According to the invention, the heat meter is arranged to determine a heat quantity, the heat meter comprising
- a flow meter as described here above, and
- a heat calculation unit arranged to:
   - receive a liquid flow rate data from the flow meter,
   - receive first and second temperature data from respective first and second associated temperature sensors, and
   - calculate the heat quantity based on the flow data and the first and second temperature data.

A heat meter according to the invention has the advantage that the flow meter and temperature sensors can be implemented as physically separate components that can be calibrated to comply with certification procedures independent of the heat calculation unit. Thus, it is possible to replace the flow meter and temperature sensors in case of malfunction without the need of interfering or changing any setting in the heat calculation unit. The heat meter is suited for installation in households and companies to measure heat consumption for charging by a heat supplier.

In preferred embodiments, the heat calculation unit is arranged to receive data representing a liquid temperature from the flow meter.

Especially, the heat calculation unit may be arranged to determine an installation error based on at least the data representing a liquid temperature, such as described above. The flow rate data and the data representing liquid temperature may be received from the flow meter via the same communication line, e.g. via one wireless transmission channel.

### Brief description of drawings

In the following, exemplary embodiments of the invention will be described in more detail with reference to the drawings of which
- Fig. 1: illustrates a flow meter embodiment in block diagram form,
- Fig. 2: illustrates a transducer interface embodiment for a flow meter,
- Fig. 3: illustrates an electrical equivalent circuit of a piezoelectric element, and
- Fig. 4: illustrates a heat meter embodiment in block diagram form.

### Detailed description of the invention

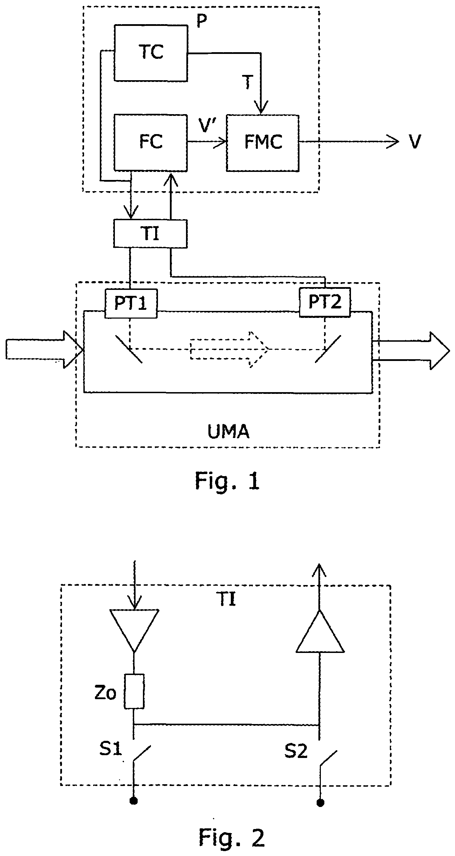

Fig. 1 illustrates a flow meter including a well-known ultrasound measurement arrangement UMA including a set of two piezoelectric ultrasound transducers PT1, PT2 arranged in connection with a measurement pipe and in direct or indirect mechanical contact with the liquid such that the transducers PT1, PT2 have essentially the same temperature as the liquid. A processor P arranged to perform the ultrasonic measurement sequence and calculate the liquid flow rate (V) accordingly includes the inventive processing.

An analog transducer interface TI interconnects the processor P and the ultrasound measurement arrangement UMA. The large arrows Indicate liquid flowing through a measurement pipe of the ultrasound measurement arrangement UMA, and the transducers PT1, PT2 serve to transmit and receive ultrasound waves through the liquid in order to measure a flow rate of the liquid. In the processor P a flow calculation part FC is electrically connected to the transducers PT1, PT2 via the transducer Interface TI. Especially, the transducer interface TI may be as further described In details in EP 0 846 936 by Kamstrup.

The flow calculation part FC is arranged to send and receive electrical signals to the transducers PT1, PT2 via the transducer interface TI to determine a measured flow velocity V', or at least data representing such measured or intermediate flow velocity V'. The measured flow velocity V' is then processed by a flow mode corrector part FMC that serves to correct the measured flow velocity V' for an actual mode of flow in the measurement pipe. This correction depends on the measured flow velocity V' and it may be implemented as tabulated correction values or calculated using a formula with V' as a variable. As a result the flow mode corrector FMC calculates a corrected flow velocity V which is the output from the flow meter.

The flow mode corrector FMC In addition takes into account a liquid temperature T in order to provide a more precise flow velocity V. This temperature T, or at least data related to the temperature, is extracted based on a measurement of data related to electrical capacitance performed on at least one of the piezoelectric ultrasound transducer PT1. This measurement is performed by a temperature calculator part TC which is connected to the transducer PT1 via the transducer interface TI. This embodiment utilizes the fact that the ultrasound transducers PT1, PT2 are in mechanical contact with the liquid in the measurement pipe and thus they will substantially adopt the actual temperature of the liquid in the measurement pipe. Further, the embodiment utilizes the fact that the piezoelectric element of the ultrasound transducers PT1, PT2 exhibits an electrical capacitance depending on temperature. It is to be understood, that alternative to directly determining the electrical capacitance of the transducer, an indirect measure of the capacitance, and thereby temperature, can be derived from the electrical response from the transducer received via the transducer interface TI, or more alternatively by a measure of the transducer Impedance as seen from the transducer interface TI.

Thus, it is possible to calculate a liquid temperature T based on a measure of the electrical capacitance of the piezoelectric ultrasound transducer based on a predetermined knowledge of the electrical capacitance as a function of temperature for the specific ultrasound transducer PT1 in question. This predetermined knowledge is incorporated into the temperature calculator TC as tabulated values of implemented in a formula. The calculated temperature T is applied to the flow mode corrector FMC together with the measured flow velocity V. Taking into account the temperature T and measured flow velocity V', the flow mode corrector FMC calculates and outputs in response a corrected flow velocity V, or at least data representing such corrected flow velocity V.

The processor circuit P including the flow calculator FC, the temperature calculator TC, and the flow mode corrector FMC can be Implemented based on a single digital signal processor, associated memory and driver circuits to the ultrasound transducers PT1, PT2 and output interface for digital output of the flow velocity V. Preferably, the processor is arranged to perform the calculation procedure at regular update intervals, these intervals being short enough to account for possible variations in flow and temperature in order to be able to output a corrected flow velocity V that precisely reflects the actual liquid flow velocity, e.g. as a data value representing a litres per hour unit of measure.

It is to be understood that all of the illustrated parts of the processor P, i.e. parts TC, FC, and FMC may be implemented as separate unit, but in preferred embodiments at least some of or all of these parts are implemented as software running on the processor P, wherein the processor P is a single-chip processor. Further, such single-chip processor P may in some embodiments include at least parts of the transducer interface TI.

It may be chosen to perform an overall calculation scheme based on temporally alternate between determination of measured flow velocity V' and temperature T, and thus the temperature T is updated for every update of corrected flow velocity V. Alternatively, it may also be chosen to only determine the temperature T at a slower update rate than the measured velocity V', e.g. for every two or every three, or even more, of the measured flow velocity updates.

More alternatively, it may be chosen to arrange the temperature calculator TC such that is performs electrical capacitance measurements on the transducer PT1 concurrent with transmitting/receiving ultrasound signals. In the last mentioned embodiment, the ultrasound signal applied to one of the transducers PT1, PT2 for measurement of flow velocity V' may also be used as the electric measurement signal used to determine the correction, and thus in this way a usual measurement scheme can be used.

Fig. 2 illustrates an embodiment of the transducer interface TI indicated In Fig. 1. The interface includes analog circuits arranged to transmit and receive ultrasound signals generated by the FC flow calculator of the processor P. The transducer interface TI Includes amplifiers providing the necessary signal conditioning to match the ultrasound transducers PT1, PT2 in both transmitting and receiving. An output impedance of the transducer interface is indicated as Zo. Switches S1 and S2 are controlled by the processor P in order to provide a desired measurement sequence, such as known in the art. The switches S1, S2 are connected so as to allow transmission of signals to and receipt of signals from both transducers S1, S2. In order to apply the measurement signal to one of or both of transducers PT1, PT2, and receive signals in response thereto, switches S1, S2 must be controlled in a suitable way to match the desired measurement sequence, such as addressed above, e.g. as described in EP 0 846 936 by Kamstrup.

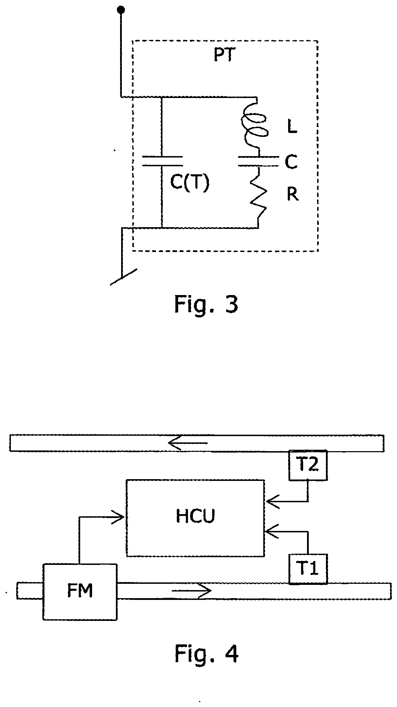

Fig. 3 illustrates a general electrical equivalent circuit diagram reflecting electrical behaviour of a piezoelectric ultrasound transducer PT as seen from the transducer interface TI. It Is known in the art that a piezoelectric element can be modelled by an equivalent circuit with a series branch of a resistor R, a capacitor C and an inductor L in parallel with a capacitor C(T) being dependent on temperature T. Thus, the purpose of temperature calculator TC in Fig. 1 is to apply a measurement signal to the transducer PT1, via the transducer interface TI, i.e. also via Zo, and receive its electrical response in order to be able to calculate C(T), or at least a value related thereto. Based on C(T) or the value related thereto, and a known relation between C(T) and T for the actual transducer PT1, It is possible to calculate T, or at least a value related to T. It Is to be understood, that neither C(T) nor T needs to be directly calculated. Especially, it may be preferred to determine the correction based directly on measured values that are only somehow related to C(T) and thus T. An indirect value related to temperature T may be connected to a specific temperature value by performing a calibration procedure for one single temperature value on the flow meter.

In some embodiments, the measurement signal is based on a sequence of one or more pulses. Alternatively, the measurement signal may be a noise signal, such as a random noise signal, e.g. a pseudo random noise signal. The method and techniques of extracting C(T) based on applying a measurement signal and receiving a response thereto, is known to the skilled person. These techniques are easily implemented in a digital signal processor part of the processor P.

Fig. 4 illustrates a block diagram of a heat meter comprising a flow meter FM such as described above. As seen, the heat meter is installed on an incoming pipe and an outgoing pipe from a heat consuming installation. The heat meter includes a heat calculation unit HCU that receives a set of data from the flow meter FM, and in and out temperature data from respective temperature sensors T1 and T2 installed to sense liquid temperatures on respective incoming and outgoing pipes. As illustrated, the flow meter FM and the temperature sensors T1, T2 are stand-alone components that can be calibrated individually separate from the HCU. Thus, these components FM, T1, T2 can be individually replaced in case of malfunction without the need to change any setting in the HCCU related to calibration of the meter. In addition, since the flow meter FM has its own built-in temperature correction as described above, the processor of the HCU does not need to perform any further temperature correction of the flow data received from the flow meter FM.

Compared to performing a temperature correction of flow in the HCU using temperature data from one of sensors T1 and T2, the calculated resulting heat consumption data become more reliable since such use of temperature data from e.g. sensor T1 would required that the flow meter FM is positioned on the same pipe as T1, whereas a significant error in the temperature correction of flow velocity is resulting, if the flow meter FM, by erroneous mounting, is placed on the same pipe as T2 instead. Thus, the flow meter FM as described provides a flexible mounting independent on temperature sensors T1, T2 while still providing a reliable calculation result.

To sum up: The invention provides a flow meter for measuring a liquid flow rate (V'). The flow meter includes a well-known ultrasound measurement arrangement (UMA) including two piezoelectric ultrasound transducers (PT1, PT2), and a processor (P) electrically connected thereto. The processor (P) is in a traditional manner arranged to measure a flow rate (V') based on ultrasonic measurement(s) of transit time difference(s) using the piezoelectric ultrasound transducers (PT1, PT2). In preferred embodiments, the processor (P) is further arranged to correct the measured flow rate (V') for an influence of a temperature (T) of the liquid in the measurement pipe. A measure of the temperature (T) of the liquid is based on a measurement of electrical capacitance, or at least measurement data related to the electrical capacitance of at least one of the two piezoelectric ultrasound transducers (PT1), thus utilizing the temperature dependence of electrical capacitance of the piezoelectric transducer element (PT1). The electrical measurement signal applied to the at least one transducer (PT1) may be a separate dedicated signal, or the temperature (T) may be derived from an electrical response to the electrical signal applied to the at least one transducer (PT1) for determining the ultrasonic transit time difference. The flow meter is capable of providing a high precision flow rate measurement over a wide range of flow rates and temperatures, and still the flow meter is simple and economical to manufacture since the temperature correction is performed without the need for a separate temperature sensor. The flow meter is suited for use in connection with a heat meter, e.g. in embodiments where the flow meter is arranged to transmit data related to the liquid temperature (T) to a heat calculation unit of the heat meter.

Although the present invention has been described in connection with the specified embodiments, it is not intended to be limited to the specific form set forth herein. Rather, the scope of the present invention is limited only by the accompanying claims. In the claims, the term "comprising" or "including" does not exclude the presence of other elements. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality. Furthermore, reference signs in the claims shall not be construed as limiting the scope.

## Claims

1. Heat meter arranged to determine a heat quantity, the heat meter comprising
- a flow meter (FM) for measuring a liquid flow rate (V),
- a heat calculation unit (HCU) arranged to:
- receive a liquid flow rate data from the flow meter (FM),
- receive first and second temperature data from respective first and second associated temperature sensors (T1, T2), and
- calculate the heat quantity based on the flow data and the first and second temperature data,
the flow meter (FM) comprising
- an ultrasound measurement arrangement (UMA) including two piezoelectric ultrasound transducers (PT1, PT2) arranged to generate and receive an ultrasound signal in a measurement pipe where the liquid flows,
- a processor (P) electrically connected to the two piezoelectric ultrasound transducers (PT1, PT2) to perform an ultrasound measurement sequence and to calculate a measure of liquid flow rate (V') based thereon, and wherein the processor (P) is further arranged to calculate the liquid flow rate (V) by applying a correction (FMC) to the measure of liquid flow rate (V'), and
- an analog transducer interface (TI), arranged to interconnect the processor (P) and the ultrasound measurement arrangement UMA,
wherein the processor (P) determines the correction (FMC) based on an electric signal received from one of the two piezoelectric ultrasound transducers (PT1) in response to an electric measurement signal applied to the one piezoelectric ultrasound transducer (PT1) by the processor (p) through the analog transducer interface (TI),
**characterised in that**
the processor (P), based on digital signal processing of the received electrical signal, is arranged to determine a measure related to temperature (T) of the liquid based on a measure related to electric capacitance (C(T)) of the one piezoelectric ultrasound transducer (PT1).

2. Heat meter according to claim 1, wherein the processor (P) is arranged to determine the correction (FMC) based on electric signals received from both of the two piezoelectric ultrasound transducers (PT1, PT2)

3. Heat meter according to claim 1, arranged to transmit data representing the liquid flow rate (V) and data representing the measure related to temperature (T) of the liquid on one communication line.

4. Heat meter according to any of the preceding claims, wherein the ultrasound measurement arrangement (UMA) and the processor (P) are integrated into one unit.

5. Heat meter according to any of the preceding claims, wherein the electrical measurement signal includes one or more pulses.

6. Heat meter according to any of the preceding claims, arranged to apply the electrical measurement signal before, during or after an ultrasound measurement sequence.

7. Heat meter according to any of the preceding claims, wherein the ultrasound measurement sequence is utilized as the electrical measurement signal.

8. Heat meter according to any of the preceding claims, wherein the heat calculation unit (HCU) is arranged to receive data representing a liquid temperature from the flow meter (FM).

9. Heat meter according to claim 8, wherein the heat calculation unit (HCU) is arranged to determine an installation error based on at least the data representing a liquid temperature.

10. Heat meter according to claim 8 or 9, wherein the flow rate data and the data representing a liquid temperature is received from the flow meter via the same communication line.

## Patentansprüche

1. Wärmemengenzähler, angeordnet, um eine Wärmemenge zu bestimmen, wobei der Wärmemengenzähler Folgendes umfasst:
- ein Durchflussmessgerät (FM) zum Messen einer Flüssigkeitsdurchflussrate (V)
- eine Wärmeberechnungseinheit (HCU), die für Folgendes angeordnet ist:
- Flüssigkeitsdurchflussratendaten von dem Durchflussmessgerät (FM) zu empfangen,
- erste und zweite Temperaturdaten von einem entsprechenden ersten und zweiten assoziierten Temperatursensor (T1, T2) zu empfangen, und
- die Wärmemenge auf Grundlage der Durchflussdaten und der ersten und zweiten Temperaturdaten zu berechnen,
wobei das Durchflussmessgerät (FM) umfasst:
- eine Ultraschall-Messanordnung (UMA), beinhaltend zwei piezoelektrische Ultraschallwandler (PT1, PT2), die dazu angeordnet sind, ein Ultraschallsignal in einem Messrohr, in dem die Flüssigkeit fließt, zu erzeugen und zu empfangen,
- einen Prozessor (P), der elektrisch mit den zwei piezoelektrischen Ultraschallwandlern (PT1, PT2) verbunden ist, um eine Ultraschall-Messsequenz durchzufuhren und um ein Maß der Flüssigkeitsdurchflussrate (V') auf Grundlage davon zu berechnen, und wobei der Prozessor (P) ferner dazu angeordnet ist, die Flüssigkeitsdurchflussrate (V) durch Anwenden einer Korrektur (FMC) an dem Maß von Flüssigkeitsdurchflussrate (V') zu berechnen, und
- eine analoge Wandlerschnittstelle (TI), die dazu angeordnet ist, den Prozessor (P) und die Ultraschall-Messanordnung UMA zu verbinden,
wobei der Prozessor (P) die Korrektur (FMC) auf Grundlage eines elektrischen Signals bestimmt, das von einem der zwei piezoelektrischen Ultraschallwandler (PT1) als Reaktion auf ein elektrisches Messsignal empfangen wird, das an den einen piezoelektrischen Ultraschallwandler (PT1) durch den Prozessor (p) über die analoge Schnittflache (TI) angewendet wird,
**dadurch gekennzeichnet, dass** der Prozessor (P) auf Grundlage von digitaler Signalverarbeitung des empfangenen elektrischen Signals dazu angeordnet ist, ein Maß in Bezug auf eine Temperatur (T) der Flüssigkeit auf Grundlage eines Maßes in
Bezug auf die elektrische Kapazität (C(T)) des einen piezoelektrischen Ultraschallwandlers (PT1) zu bestimmen.

2. Wärmemengenzähler nach Anspruch 1, wobei der Prozessor (P) dazu angeordnet ist, die Korrektur (FMC) auf Grundlage von elektrischen Signalen zu bestimmen, die von beiden der zwei piezoelektrischen Ultraschallwandler (PT1, PT2) empfangen werden.

3. Wärmemengenzähler nach Anspruch 1, dazu angeordnet, Daten, die die Flüssigkeitsdurchflussrate (V) darstellen, und Daten, die das Maß in Bezug auf die Temperatur (T) der Flüssigkeit auf einer Kommunikationsleitung darstellen, zu übertragen.

4. Wärmemengenzähler nach einem der vorhergehenden Ansprüche, wobei die Ultraschallmessanordnung (UMA) und der Prozessor (P) in einer Einheit integriert sind.

5. Wärmemengenzähler nach einem der vorhergehenden Ansprüche, wobei das elektrische Messsignal einen oder mehrere Impulse beinhaltet.

6. Wärmemengenzähler t nach einem der vorhergehenden Ansprüche, dazu angeordnet, das elektrische Messsignal vor, während oder nach einer Ultraschall-Messsequenz anzuwenden.

7. Wärmemengenzähler nach einem der vorhergehenden Ansprüche, wobei die Ultraschallmesssequenz als das elektrische Messsignal verwendet wird.

8. Wärmemengenzähler nach einem der vorhergehenden Ansprüche, wobei die Wärmeberechnungseinheit (FICU) dazu angeordnet ist, Daten, die eine Flüssigkeitstemperatur darstellen, von dem Durchflussmessgerat (FM) zu empfangen.

9. Wärmemengenzähler nach Anspruch 8, wobei die Wärmeberechnungseinheit (FICU) dazu angeordnet ist, einen Installationsfehler auf Grundlage von zumindest den Daten, die eine Flüssigkeitstemperatur darstellen, zu bestimmen.

10. Wärmemengenzähler nach Anspruch 8 oder 9, wobei die Durchflussratendaten und die Daten, die eine Flüssigkeitstemperatur darstellen, von dem Durchflussmessgerat über die gleiche Kommunikationsleitung empfangen werden.

## Revendications

1. Compteur d'énergie thermique agencé pour déterminer une quantité de chaleur, le compteur comprenant:
- un débitmètre (FM) destiné à mesurer un débit (V) de liquide,
- une unité de calcul de chaleur (HCU) agencée pour :
- recevoir des données de débit de liquide provenant du débitmètre (FM),
- recevoir des premières et secondes données de température provenant des premier et second capteurs de température associés (T1, T2), et
- calculer la quantité de chaleur sur la base des données d'écoulement et des premières et secondes données de température,
le débitmètre (FM) comprenant:
- un agencement de mesure par ultrasons (UMA) comprenant deux transducteurs à ultrasons piézoélectriques (PT1, PT2) agencés pour générer et recevoir un signal ultrason dans un tuyau de mesure où le liquide s'écoule,
- un processeur (P) raccordé électriquement aux deux transducteurs à ultrasons piézoélectriques (PT1, PT2) pour effectuer une séquence de mesures par ultrasons et calculer une mesure de débit (V') de liquide basée sur celle-ci, et ledit processeur (P) étant agencé en outre pour calculer le débit (V) de liquide en appliquant une correction (FMC) à la mesure du débit (V') de liquide, et
- une interface de transducteur analogique (TI) agencée pour relier le processeur (P) et l'agencement de mesure par ultrasons (UMA), ledit processeur (P) déterminant la correction (FMC) sur la base d'un signal électrique reçu de l'un des deux transducteurs à ultrasons piézoélectriques (PT1) en réponse à un signal de mesure électrique appliqué audit transducteur à ultrasons piézoélectrique (PT1) par le processeur (p) par l'intermédiaire de l'interface de transducteur analogique (TI), **caractérisé en ce que** le processeur (P), sur la base d'un traitement de signal numérique du signal électrique reçu, est agencé pour déterminer une mesure liée à la température (T) du liquide sur la base d'une mesure liée à la capacité électrique (C(T)) dudit transducteur à ultrasons piézoélectrique (PT1).

2. Compteur d'énergie thermique selon la revendication 1, ledit processeur (P) étant agencé pour déterminer la correction (FMC) sur la base des signaux électriques reçus des deux transducteurs à ultrasons piézoélectriques (PT1, PT2).

3. Compteur d'énergie thermique selon la revendication 1, agencé pour transmettre des données représentant le débit (V) de liquide et des données représentant la mesure liée à la température (T) du liquide sur une ligne de communication.

4. Compteur d'énergie thermique selon l'une quelconque des revendications précédentes, ledit agencement de mesure par ultrasons (UMA) et ledit processeur (P) étant intégrés dans une seule unité.

5. Compteur d'énergie thermique selon l'une quelconque des revendications précédentes, ledit signal de mesure électrique comprenant une ou plusieurs impulsions.

6. Compteur d'énergie thermique selon l'une quelconque des revendications précédentes, agencé pour appliquer le signal de mesure électrique avant, pendant ou après une séquence de mesures par ultrasons.

7. Compteur d'énergie thermique selon l'une quelconque des revendications précédentes, ladite séquence de mesures par ultrasons étant utilisée en tant que signal de mesure électrique.

8. Compteur d'énergie thermique selon l'une quelconque des revendications précédentes, ladite unité de calcul de chaleur (HCU) étant agencée pour recevoir des données représentant une température de liquide provenant du débitmètre (FM).

9. Compteur d'énergie thermique selon la revendication 8, ladite unité de calcul de chaleur (HCU) étant agencée pour déterminer une erreur d'installation sur la base d'au moins les données représentant une température de liquide.

10. Compteur d'énergie thermique selon la revendication 8 ou 9, lesdites données de débit et lesdites données représentant une température de liquide étant reçues du débitmètre par l'intermédiaire de la même ligne de communication.
